# EUROPÄISCHE PATENTSCHRIFT

(11) **EP 2 722 478 B1**
(45) Veröffentlichungstag und Bekanntmachung des Hinweises auf die Patenterteilung: **29.10.2014**
(21) Anmeldenummer: 13405070.7
(22) Anmeldetag: 14.06.2013
(51) Int. Cl.: E06C 7/08

(54) **Leiter**
Ladder
Echelle

(30) Priorität: 19.10.2012 CH 20632012
(43) Veröffentlichungstag der Anmeldung: 23.04.2014
(73) Patentinhaber: MSU- Normen Henri Zenhäusern AG, 8902 Urfdorf (CH)
(72) Erfinder: Illi, Walter, 8092 Urdorf (CH)
(74) Vertreter: Rottmann, Maximilian

(56) Entgegenhaltungen:
- AT-B- 333 595
- CH-A- 543 011
- FR-A1- 2 277 967

## Beschreibung

### Technisches Gebiet

Die Erfindung betrifft eine Leiter mit aus Hohlprofilen bestehenden Holmen und Sprossen sowie ein Verfahren zum Herstellen einer Leiter.

### Stand der Technik

In der CH 543 011 (Heinrich Zenhäusern) wie auch der AT 333595B ist ein Verfahren zum Verbinden zweier Rohrstücke mit unterschiedlichen Durchmessern sowie eine nach dem Verfahren hergestellte Verbindung beschrieben, wobei es insbesondere um das Verbinden von Leitersprossen mit Leiterholmen geht wobei beide Dokumente eine Leiter gemäß dem Oberbegriff des Anspruchs 1 offenbaren. In das Ende eines dünneren Rohrstücks wird ein Stopfen eingeführt, der einen konischen Abschnitt aufweist. Danach wird das Rohrstückende samt Stopfen durch eine Mantelbohrung in einem dickeren Rohrstück hindurch so gegen eine Auflage im Inneren des dickeren Rohrstücks gepresst, dass der innerhalb der Bohrung vorstehende Rand des dünneren Rohrstücks auseinandergespreizt und gestaucht wird. Auf diese Weise soll eine wasserdichte und nicht lösbare Verbindung geschaffen werden. In einem alternativen Ausführungsbeispiel ist das grössere Rohrstück im Inneren u.a. mit einander diametral gegenüberliegenden Stegen versehen, welche beim Einführen des Rohrstückendes mit dem Stopfen zusätzlich Widerstand leisten und ein noch besseres Stauchen des Randes des Rohrstücks verursachen. Die Stauchung des Rohrstückendes erfolgt in Einschubrichtung gesehen jedenfalls vor den beiden genannten Stegen.

Aus der EP 0 508 028 B1 (MSU-Normen Henri Zenhäusern AG) ist ein Verfahren zum Verbinden von Leitersprossen und Leiterholmen bekannt. Dabei wird das Ende der dünneren Sprosse in eine Mantelbohrung des dickeren Holms eingeführt und dabei gestaucht. Zur Stauchung des Sprossenendes wird vor dem Einführen ein mit einem konischen Abschnitt versehener Stopfen in das zu stauchende Ende der Sprosse eingeführt. Das zu stauchende Ende der Sprosse wird zusammen mit dem Stopfen durch die Mantelbohrung in den Holm eingeführt und gegen die Innenwand desselben gepresst. Dabei dringt der Stopfen mit seinem konischen Abschnitt weiter in die Sprosse ein und weitet dieses endseitig auf. Um zu Verhindern, dass anstelle eines Stauchrings eine wulstförmige Verdickung mit unbestimmter Form entsteht, welche sich entlang des Sprossenrohrs erstreckt, wird die Sprosse mit Längsrippen versehen, deren Ende einen Begrenzungsanschlag für das Eindringen des konischen Abschnitts des Stopfens bzw. für die Fortpflanzung des Stauchung in Längsrichtung bilden.

Obwohl sich beide vorgängig beschriebenen Verfahren bei der Herstellung von Leitern wie auch die nach dem Verfahren hergestellten Leitern bewährt haben, wäre es wünschenswert, wenn die Leiter insgesamt noch stabiler ausgebildet werden könnte.

### Darstellung der Erfindung

Aufgabe der Erfindung ist es, eine dem eingangs genannten technischen Gebiet zugehörende Leiter zu schaffen, welche erhöhten Anforderungen in Bezug auf die Stabilität gerecht wird, indem insbesondere die Verankerung der Sprossen in den beiden Holmen verbessert wird.

Die Lösung der Aufgabe ist durch die Merkmale des Anspruchs 1 definiert. Gemäss der Erfindung weist die Leiter aus Hohlprofilen bestehende Holme und Sprossen auf, wobei der jeweilige Holm auf der Innenseite mit zumindest zwei Rippen versehen ist und die jeweilige Sprosse in einer radialen Öffnung des jeweiligen Holms aufgenommen und endseitig mit einem Stopfen versehen ist, welcher beim Einführen der Sprosse in den Holm an der Innenseite des Holms zur Anlage kommt und die Sprosse im Endbereich derart aufweitet, dass die Sprosse im Holm verankert wird. Definitionsgemäss ist der Stopfen derart ausgebildet, dass die Sprosse beim Einführen in den Holm vor und hinter der jeweiligen Rippe aufgeweitet wird. Dadurch wird die Sprosse an zwei axial beabstandeten Bereichen in dem Holm fixiert.

Eine derartige Leiter ist insgesamt wesentlich stabiler, da durch die zweifache Aufweitung der einzelnen Sprossen in dem jeweiligen Holm eine wesentlich bessere Verankerung der jeweiligen Sprosse in dem Holm entsteht. Diesbezügliche Versuche haben ergeben, dass eine derart im Holm verankerte Sprosse ungleich höhere Auszugskräfte aufnehmen kann. Zudem kann die Leiter gleichzeitig höhere Scherkräfte zwischen den beiden Holmen aufnehmen, welche beispielsweise dann entstehen, wenn die Leiter auf einem unebenen oder schiefen Untergrund aufgestellt wird. Zudem kann die jeweilige Sprosse im Bereich der Öffnung, durch welche die Sprosse in den Holm eingeführt wird, eine durchgehend konstante Wandstärke aufweisen, was sich ebenfalls sehr vorteilhaft auf die gesamte Stabilität der Leiter auswirkt und letztlich dazu führt, dass die Leiter eine grössere Tragkraft besitzt.

Eine bevorzugte Weiterbildung sieht vor, dass der jeweilige Holm zwei einander diametral gegenüberliegende Rippen aufweist und der Stopfen mit einem konischen Abschnitt zum Aufweiten der Sprosse hinter den beiden genannten Rippen versehen ist, wobei der maximale Aussendurchmesser des konischen Abschnitts kleiner ist als der lichte Abstand zwischen den beiden einander diametral gegenüberliegende Rippen. Bei dieser Weiterbildung kann ein konischer Abschnitt des Stopfens bis hinter die beiden Rippen geführt werden, so dass die Sprosse mittels des konischen Abschnitts des Stopfens hinter den beiden Rippen aufgeweitet werden kann.

Bei einem weiteren bevorzugten Ausführungsbeispiel weist der Stopfen einen ersten vorderen konischen Abschnitt und einen zweiten hinteren konischen Abschnitt auf, wobei der vordere konische Abschnitt derart ausgebildet ist, dass die Sprosse beim Einführen in den Holm im Bereich zwischen der jeweiligen Rippe und der radialen Bohrung aufgeweitet wird und wobei der hintere konische Abschnitt derart ausgebildet ist, dass die Sprosse beim Einführen in den Holm im Bereich ihres axialen Endes hinter den beiden Rippen aufgeweitet wird. Der besondere Vorteil dieser Ausbildung liegt darin, dass sich die Sprosse einerseits im Bereich zwischen der jeweiligen Rippe und der radialen Bohrung sowie zusätzlich an den beiden Rippen abstützen kann.

Bei einer bevorzugten Weiterbildung ist die Sprosse auf der Innenseite mit einem sich zum axialen Ende hin konisch erweiternden Bereich versehen ist, welcher zur Aufnahme des Stopfens ausgebildet ist. Durch diese Ausbildung kann die Sprosse zumindest abschnittsweise der Kontur des Stopfens angepasst werden. Zudem verringert sich dadurch die Wandstärke der Sprosse zum Ende hin, so dass das Aufweiten der Sprosse im axialen Endbereich erleichtert wird.

Vorzugsweise ist die jeweilige Öffnung im Holm zur Aufnahme einer Sprosse rund und der lichte Abstand zwischen den beiden genannten Rippen entspricht zumindest annähernd dem Durchmesser der Öffnung. Diese Ausbildung hat den Vorteil, dass die Sprosse auf der Aussenseite einen durchgehend einheitlichen Durchmesser aufweisen kann, und dass sie sich nach dem Aufweiten durch den Stopfen sowohl an der Wand der Öffnung wie auch den Rippen selber anlegt.

Bei einer bevorzugten Weiterbildung der Leiter wird vorgeschlagen, dass der Aussendurchmesser der Sprosse zwischen 0.05 und 1mm, vorzugsweise zwischen 0.2 und 0.5mm, kleiner ist als der lichte Abstand zwischen den beiden genannten Rippen. Durch den vorgeschlagenen Aussendurchmesser der Sprosse in Relation zu dem Abstand zwischen den beiden Rippen braucht die Sprosse nur geringfügig aufgeweitet zu werden, damit sie hinter den Rippen aufgeweitet und dadurch verankert werden kann. Innerhalb des genannten Bereichs kann die Sprosse zudem vergleichsweise einfach aufgeweitet werden.

Bei einer weiteren bevorzugten Weiterbildung ist der Stopfen mit einem Kopfteil versehen, der auf den zweiten konischen Abschnitt folgt, wobei der axiale Abstand zwischen dem axialen Ende des Kopfteils und dem dem Kopfteil zugewandten Ende des zweiten zylindrischen Abschnitts kleiner ist als der Innenradius oder die halbe Breite der Innenseite des jeweiligen Holms. Dadurch kann sichergestellt werden, dass die hintere Aufweitung der Sprosse hinter den beiden Rippen zu liegen kommt.

Besonders bevorzugt sind die beiden auf der Innenseite des Holms angebrachten Rippen unter einem rechten Winkel zur Längsachse der radialen Öffnung angeordnet. Diese Ausbildung ermöglicht in besonders bevorzugter Weise, dass die Rippen in optimaler Weise als Verstärkungsrippen für den Holm dienen.

Bei einer weiteren, bevorzugten Weiterbildung der Leiter sind auf der Innenseite des Holms vier jeweils um 90° zueinander versetzten Rippen angeordnet. Dadurch kann der Holm selber mit einer vergleichsweise dünnen Wandstärke versehen werden, was sich vorteilhaft auf das Gewicht des Holms und damit der gesamten Leiter auswirkt.

Indem der konische vordere Abschnitt des Stopfens eine geringere Konizität aufweist als der konische hintere Abschnitt, kann bei einer bevorzugten Weiterbildung der Leiter erreicht werden, dass sich das Ende der Sprosse stärker aufweitet und die beiden Rippen nennenswert hintergriffen werden.

Indem der Holm und die Sprosse aus Leichtmetall und der Stopfen aus Kunststoff hergestellt werden, wird eine besonders leichte Bauweise der Leiter begünstigt. Alternativ kann der Stopfen auch aus Leichtmetall hergestellt werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Einen Holm, eine Sprosse und einen Stopfen im Querschnitt;
- Fig. 2: Die in dem Holm verankerte Sprosse
- Fig. 3: Die Sprosse zusammen mit dem Stopfen.

Grundsätzlich sind in den Figuren gleiche Teile mit gleichen Bezugszeichen versehen.

### Wege zur Ausführung der Erfindung

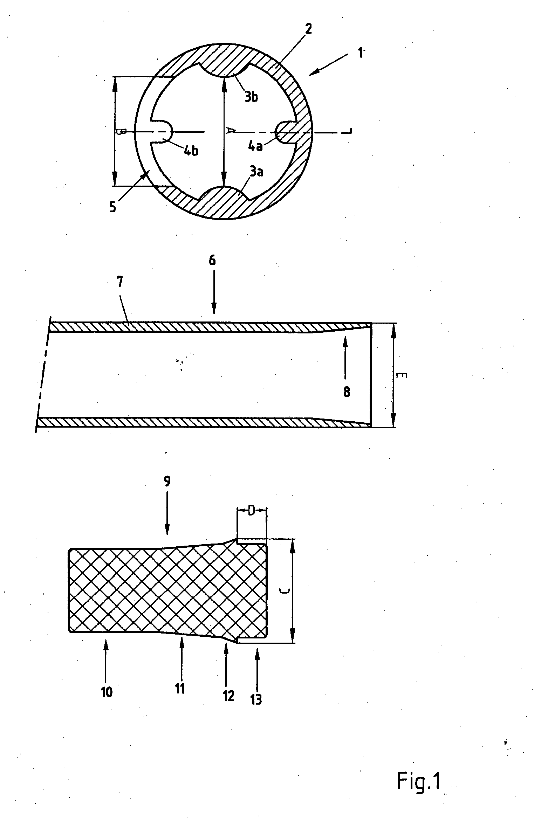

Die Fig. 1 zeigt in schematischer Darstellung Teile einer Leiter, namentlich einen Holm 1, einen Teil einer Sprosse 6 und einen Stopfen 9 jeweils im Querschnitt. Sowohl der Holm 1 wie auch die Sprosse 6 werden durch Hohlprofile gebildet. Da der Aufbau von gattungsgemässen Leitern, welche zwei Holme und eine Vielzahl von die beiden Holme miteinander verbindenden Sprossen aufweist, bekannt ist, wird nachfolgend beispielhaft lediglich ein Holm und eine Sprosse sowie ein die kraft- und vorzugsweise auch formschlüssige Verbindung zwischen Holm und Sprosse bewirkender Stopfen dargestellt und erläutert.

Der Holm 1 wird durch ein Hohlprofil in Form eines runden Grundkörpers 2 gebildet, welcher auf der Innenseite mit Rippen versehen ist. Im vorliegenden Beispiel ist der Grundkörper 2 auf der Innenseite durch insgesamt vier Rippen 3a, 3b, 4a, 4b verstärkt. Die vier Rippen 3a, 3b, 4a, 4b sind um je 90° zueinander versetzt, wobei jeweils zwei einander diametral gegenüberliegende Rippen 3a, 3b; 4a, 4b eine gleiche oder zumindest ähnliche Kontur aufweisen. Der Holm 1 ist mit einer radialen Öffnung in Form einer Bohrung 5 versehen, durch welche die jeweilige Sprosse 6 in den Grundkörper 2 eingeführt werden kann. Es versteht sich, dass jeder Holm 1 eine der vorgesehenen Anzahl Sprossen entsprechende Anzahl von radialen Bohrungen aufweist. Die jeweilige Bohrung 6 ist nicht durchgehend ausgebildet, sondern führt nur durch die die Innenseite der Leiter bildende Wand des Holms 1, so dass die Aussenseite des jeweiligen Holms eine durchgehend glatte Oberfläche aufweist. Der lichte Abstand A zwischen den beiden einander diametral gegenüberliegenden und unter einem rechten Winkel zur Längsachse L der Bohrung 5 angeordneten Rippen 3a, 3b entspricht im Wesentlichen dem Durchmesser B der Bohrung 5.

Die Sprosse 6 wird durch einen rohrförmigen Körper 7 gebildet, der zum Ende hin auf der Innenseite einen sich konisch erweiternden Bereich 8 aufweist. Der mit E bezeichnete Aussendurchmesser der Sprosse 1 ist geringfügig kleiner als der Durchmesser B der in den Holm 1 eingelassenen Bohrung 5, so dass der Endbereich der Sprosse 1 durch die Bohrung 5 in den Holm 1 eingeführt werden kann. Die Sprosse 6 kann auf der Innenseite ggf. auch mit Verstärkungsrippen versehen werden. Auf der Aussenseite weist die Sprosse 6 vorzugsweise Rippen und oder Vertiefungen auf, welche insbesondere eine Rutschhemmung bewirken und einer Person, welche die Leiter besteigt, einen sicheren Halt bieten sollen. Der Stopfen 9 besitzt einen zylindrischen Vorderteil 10, einen vorderen bzw. ersten konischen Abschnitt 11, einen hinteren bzw. zweiten konischen Abschnitt 12 und einen Kopfteil 13.

Die Bezeichnungen zylindrischen Vorderteil 10, vorderer bzw. erster konischer Abschnitt 11 und hinterer bzw. zweiter konischer Abschnitt 12 des Stopfens 9 beziehen sich auf die Einschubrichtung des Stopfens 9 in die Sprosse 6, indem der Stopfen 9 zuerst mit seinem zylindrischen Vorderteil 10, gefolgt von dem vorderen bzw. ersten konischen Abschnitt 11 und nachfolgend dem hinteren bzw. zweiten konischen Abschnitt 12 in die jeweilige Sprosse 6 eingeführt wird.

Der Aussendurchmesser des zylindrischen Vorderteils 10 des Stopfens ist etwas kleiner als der Innendurchmesser der Sprosse 6. Der vordere konische Abschnitt 11 weist im Wesentlichen eine zu dem sich konisch erweiternden Endbereich 8 der Sprosse 6 korrespondierende Form auf, während der hintere konische Abschnitt 12 des Stopfens eine grössere Steigung aufweist, so dass der Endbereich der Sprosse 6 beim Einpressen des Stopfens 9 in die Sprosse verstärkt aufgeweitet wird. Der maximale Aussendurchmesser C des Stopfens 9 ist etwas kleiner als der Durchmesser B der in den Holm 1 eingelassenen Bohrung 5, so dass der Stopfen durch die Bohrung 5 in den Holm 1 eingeführt werden kann. Der maximale Aussendurchmesser C des Stopfens 9, welcher in der Form eine kreisrunden Kragens den Übergang von dem hinteren konischen Abschnitt 12 zu dem Kopfteil 13 bildet, ist ebenfalls kleiner als der lichte Abstand A zwischen den einander diametral gegenüberliegenden und unter einem rechten Winkel zur Längsachse L der Bohrung 5 angeordneten Rippen 3a, 3b.

Der Abstand D zwischen dem axialen Ende des Kopfteils 13 und dem Ende des zweiten zylindrischen Abschnitts 12 des Stopfens 9 ist kleiner als der Innenradius des Hohlprofils. Im Falle eines nicht runden Hohlprofils muss der Abstand D zwischen dem axialen Ende des Kopfteils 13 und dem Ende des zweiten zylindrischen Abschnitts 12 des Stopfens 9 kleiner sein, als die halbe Breite der Innenseite des jeweiligen Holms. Die Breite des Holms wird dabei in Richtung der Längsachse L gemessen. Diese Ausbildung erlaubt, dass der Stopfen 9 mit seinem hinteren konischen Abschnitt 12 hinter die engste Stelle zwischen den beiden genannten Rippen 3a, 3b geführt werden kann, so dass die Sprosse 6 hinter den beiden Rippen 3a, 3b aufgeweitet werden kann, wie anschliessend noch näher erläutert wird.

Vorzugsweise werden der Holm 1 und die Sprosse 6 aus Leichtmetall, insbesondere Aluminium gefertigt, während der Stopfen vorzugsweise aus einem Kunststoff wie beispielsweise PVC oder einem Polyamid gefertigt wird.

Vor dem Einführen des Endbereichs der jeweiligen Sprosse 6 in den Holm 1, wird der Stopfen 9 soweit in die Sprosse 6 eingeführt bzw. eingedrückt, bis der erste bzw. vordere konische Abschnitt 11 des Stopfens an dem korrespondierenden Abschnitt 8 der Sprosse 6 flächig zur Anlage kommt. Danach wird der Endbereich der Sprosse 6 über die Öffnung 5 in den Holm 1 eingeschoben. Dabei wird der Stopfen 9 mit dem Kopfteil 13 voran in die Sprosse 6 eingeführt. Darauf folgt der hintere bzw. zweite konische Abschnitt 12 des Stopfens 9, gefolgt von dem vorderen bzw. ersten konischen Abschnitt 11 und schliesslich dem zylindrischen Vorderteil 10. Der Stopfen 9 kommt schliesslich mit seinem Kopfteil 13 an der hinteren, der Öffnung 5 gegenüberliegenden Rippe 4a im Holm 1 zur Anlage. Die Sprosse 6 wird nun unter der Einwirkung einer erheblichen Kraft weiter in den Holm 1 hineingedrückt, so dass der Stopfen weiter in die Sprosse eindringt und diese sich im Bereich ihres axialen Endes hinter den beiden Rippen 3a, 3b aufweitet und diese hintergreift.

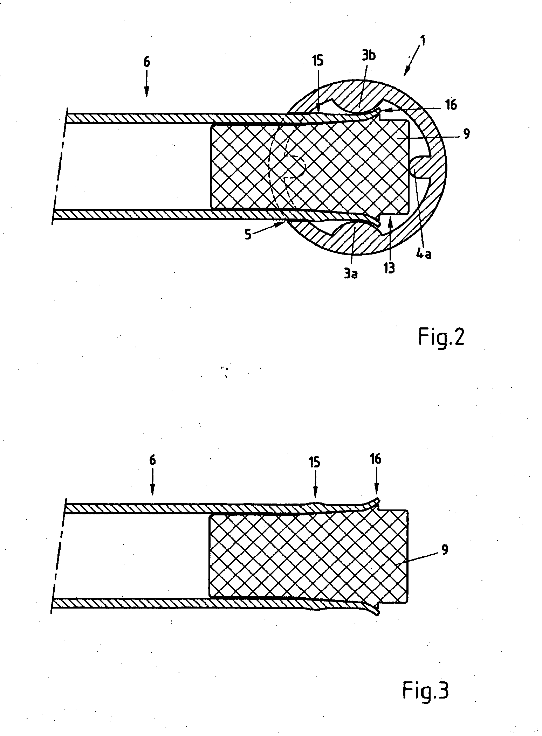

Die Fig. 2 zeigt den Endbereich der Sprosse 6 nach dem Fixieren an dem Holm 1. Die durch den hinteren konischen Abschnitt bewirkte Aufweitung der Sprosse 6 wird hintere Aufweitung 16 genannt. Der Stopfen 9 ist dabei derart ausgebildet und auf den Holm 1 abgestimmt, dass sich die Sprosse 6 einerseits im Bereich der Öffnung 5 wie auch im Bereich zwischen der Öffnung 5 und den beiden einander gegenüberliegenden Rippen 3a, 3b radial aufweitet, so dass sie einerseits radial an den Wänden der Öffnung 5 zur Anlage kommt und anderseits im Bereich zwischen der Öffnung 5 und den beiden einander gegenüberliegenden Rippen 3a, 3b eine Art Aussenwulst 15 entsteht, welcher auch vordere Aufweitung genannt wird. Dieser Aussenwulst 15 trägt dazu bei, dass die Sprosse 6 fest im Holm 1 verankert ist, zumal sie die Öffnung 5 bzw. die Wand der Öffnung hintergreift. Zusammen mit der hinteren Aufweitung wird die Sprosse 6 an zwei in axialer Richtung voneinander beabstandeten Bereichen -Aufweitungen 15, 16-innerhalb des Holms 1 fixiert. Eine derart fixierte Sprosse macht die Leiter insgesamt wesentlich stabiler. Wie bereits eingangs erwähnt, kann eine derart im Holm verankerte Sprosse ungleich höhere Auszugskräfte aufnehmen. Diesbezügliche Versuche haben ergeben, dass die zum Entfernen einer Sprosse aus dem Holm benötigte Kraft ca. 2 bis 3 mal höher ist, als bei den bisherigen Verankerungsmethoden, bei denen die Sprosse nur in einem Bereich aufgeweitet wurde. Zudem kann die Leiter gleichzeitig höhere Scherkräfte zwischen den beiden Holmen aufnehmen, welche beispielsweise dann entstehen, wenn die Leiter einseitig belastet wird und/oder auf unebenem oder schiefem Untergrund aufgestellt wird. Zudem besitzt Sprosse im Bereich zwischen den beiden Holmen eine durchgehend einheitliche Wandstärke, was sich ebenfalls sehr vorteilhaft auf die gesamte Stabilität der Leiter auswirkt und zu einer grösseren Tragkraft der Leiter führt. Auch in Bezug auf Verschleisserscheinungen, welche beispielsweise durch nicht unbeweglich in dem jeweiligen Holm verankerte Sprossen entstehen können, ist eines solche Leiter wesentlich besser.

Die Fig. 3 zeigt die im Endbereich aufgeweitete Sprosse 6 mit eingeschobenem Stopfen 9 jedoch ohne den Holm. Aus dieser Darstellung sind die beiden aufgeweiteten und axial beabstandeten Aufweitungen 15, 16 der Sprosse 6 erkennbar. Beide aufgeweiteten Bereiche erstrecken sich vorzugsweise im Wesentlichen über den gesamten Umfang der Sprosse 6.

Anstelle des in dem vorgängigen Ausführungsbeispiel gezeigten Stopfens 9 kann beispielsweise auch ein Stopfen zum Einsatz kommen, bei dem zwischen den beiden konischen Bereichen noch ein zylindrischer Abschnitt ausgebildet ist, ähnlich wie bei dem Stopfen der eingangs genannten CH 543 011. Es versteht sich, dass die Dimensionierung des Stopfens an die Gegebenheiten des Holms und der jeweiligen Sprosse angepasst werden muss. Insbesondere muss darauf geachtet werden, dass der die hintere Aufweitung bewirkenden zylindrische Abschnitt des Stopfens hinter die beiden einander diametral gegenüberliegenden Rippen geschoben werden kann, so dass die hintere Aufweitung der Sprosse hinter die beiden genannten Rippen zu liegen kommt. Anstelle von runden Hohlprofilen können für die Holme beispielsweise auch ovale oder rechteckige Hohlprofile verwendet werden. Gleiches trifft für die Sprossen zu, welche ebenfalls oval oder rechteckig sein können.

## Patentansprüche

1. Leiter mit aus Hohlprofilen bestehenden Holmen und Sprossen, wobei der jeweilige Holm (1) auf der Innenseite mit zumindest zwei Rippen (3a, 3b) versehen ist und die jeweilige Sprosse (6) in einer radialen Öffnung (5) des jeweiligen Holms (1) aufgenommen und endseitig mit einem Stopfen (9) versehen ist, welcher beim Einführen der Sprosse (6) in den Holm (1) an der Innenseite des Holms (1) zur Anlage kommt und die Sprosse (6) im Endbereich derart aufweitet, dass die Sprosse (6) im Holm (1) verankert wird, **dadurch gekennzeichnet, dass** der Stopfen (9) derart ausgebildet ist, dass die Sprosse (6) beim Einführen in den Holm (1) vor und hinter der jeweiligen Rippe (3 a, 3b) aufgeweitet wird.

2. Leiter nach Anspruch 1, **dadurch gekennzeichnet, dass** der jeweilige Holm (1) zwei einander diametral gegenüberliegende Rippen (3a, 3b) aufweist und der Stopfen (9) mit einem konischen Abschnitt (12) zum Aufweiten der Sprosse hinter den beiden genannten Rippen (3a, 3b) versehen ist, wobei der maximale Aussendurchmesser (C) des konischen Abschnitts (12) kleiner ist als der lichte Abstand (A) zwischen den beiden einander diametral gegenüberliegende Rippen (3a, 3b).

3. Leiter nach Anspruch 1, **dadurch gekennzeichnet, dass** der Stopfen (9) einen ersten vorderen konischen Abschnitt (11) und einen zweiten hinteren konischen Abschnitt (12) aufweist, wobei der vordere konische Abschnitt (11) derart ausgebildet ist, dass die Sprosse (6) beim Einführen in den Holm (1) im Bereich zwischen der jeweiligen Rippe (3a, 3b) und der radialen Öffnung (5) mit einer ersten Aufweitung (15) versehen wird und wobei der hintere konische Abschnitt (12) derart ausgebildet ist, dass die Sprosse (6) beim Einführen in den Holm (1) im Bereich ihres axialen Endes hinter den beiden Rippen (3a, 3b) mit einer zweiten Aufweitung (16) versehen wird.

4. Leiter nach einem der vorhergehenden Ansprüche, **dadurch gekennzeichnet, dass** die Sprosse (6) auf der Innenseite mit einem sich zum axialen Ende hin konisch erweiternden Bereich (8) versehen ist, welcher zur Aufnahme des Stopfens (9) ausgebildet ist.

5. Leiter nach einem der vorhergehenden Ansprüche, **dadurch gekennzeichnet, dass** die jeweilige Öffnung (5) im Holm (1) zur Aufnahme einer Sprosse (6) rund ist und der lichte Abstand (A) zwischen den beiden genannten Rippen (3a, 3b) zumindest annähernd dem Durchmesser der Öffnung (5) entspricht.

6. Leiter nach einem der vorhergehenden Ansprüche, **dadurch gekennzeichnet, dass** der Aussendurchmesser der Sprosse (1) zwischen 0.05 und 1mm, insbesondere zwischen 0.2 und 0.5mm kleiner ist als der lichte Abstand (A) zwischen den beiden genannten Rippen (3a, 3b).

7. Leiter nach Anspruch 3, **dadurch gekennzeichnet, dass** der Stopfen (9) mit einem Kopfteil (13) versehen ist, der auf den zweiten konischen Abschnitt (12) folgt, wobei der axiale Abstand (D) zwischen dem axialen Ende des Kopfteils (13) und dem dem Kopfteil (13) zugewandten Ende des zweiten zylindrischen Abschnitts (12) kleiner ist als der Innenradius oder die halbe Breite der Innenseite des jeweiligen Holms (1).

8. Leiter nach einem der vorhergehenden Ansprüche, **dadurch gekennzeichnet, dass** auf der Innenseite des Holms (1) zwei Rippen (3a, 3b) unter einem rechten Winkel zur Längsachse (L) der radialen Öffnung (5) angeordnet sind.

9. Leiter nach einem der vorhergehenden Ansprüche, **dadurch gekennzeichnet, dass** auf der Innenseite des Holms (1) vier jeweils um 90° zueinander versetzten Rippen (3a, 4a, 3b, 4b) angeordnet sind.

10. Leiter nach einem der vorhergehenden Ansprüche, **dadurch gekennzeichnet, dass** der konische vordere Abschnitt (11) des Stopfens (9) eine geringere Konizität aufweist als der konische hintere Abschnitt (12).

11. Leiter nach einem der vorhergehenden Ansprüche, **dadurch gekennzeichnet, dass** der Holm (1) und die Sprosse (6) aus Leichtmetall sind und der Stopfen (9) aus Leichtmetall oder Kunststoff.

12. Verfahren zum Verankern einer durch ein Hohlprofil gebildeten Leitersprosse in einem durch ein Hohlprofil gebildeten Leiterholm, wobei der jeweilige Holm (1) auf der Innenseite mit zumindest zwei Rippen (3a, 3b) versehen ist und die jeweilige Sprosse (6) durch eine radiale Öffnung (5) des Holms (1) in diesen eingeschoben wird, und wobei in das Ende der Sprosse (6) ein die Verankerung bewirkender Stopfen (9) eingeführt wird, welcher beim Einführen der Sprosse (6) in den Holm (1) an der Innenseite des Holms (1) zur Anlage kommt und die Sprosse (6) zwecks Verankerung aufweitet, **dadurch gekennzeichnet, dass** die Sprosse (6) beim Einführen in den Holm (1) durch den Stopfen vor und hinter der jeweiligen Rippe (3a, 3b) aufgeweitet wird.

## Claims

1. A ladder comprising tubular side rails and rungs, each side rail (1) featuring on the inner side at least two ribs (3a, 3b) and each rung (6) being mounted in a radial opening (5) of each side rail (1) and ended with a plug (9) which on insertion of the rung (6) into the side rail (1) comes into contact with the inner side of the side rail (1) in widening the rung (6) endwise such that the rung (6) is anchored in the side rail (1), **characterized in that** the plug (9) is configured such that the rung (6) on being inserted into the side rail (1) is widened in front of and behind each rib (3a, 3b).

2. The ladder as set forth in claim 1, **characterized in that** each side rail (1) comprises two diametrically opposed ribs (3a, 3b) and the plug (9) is provided with a conical portion (12) for widening the rung behind the two ribs (3a, 3b), the maximum outer diameter (C) of the conical portion (12) being smaller than the spacing (A) between the two diametrically opposed ribs (3a, 3b).

3. The ladder as set forth in claim 1, **characterized in that** the plug (9) comprises a first front conical portion (11) and a second rear conical portion (12), the front conical portion (11) being configured such that the rung (6) on being inserted into the side rail (1) is provided in the portion between the ribs (3a, 3b) and the radial opening (5) with a first widening (15) and the rear conical portion (12) being configured such that the rung (6) on being inserted into the side rail (1) is provided in the portion of its axial end behind the two ribs (3a, 3b) with a second widening (16).

4. The ladder as set forth in any of the preceding claims, **characterized in that** the rung (6) is provided on the inner side with a conically widening portion (8) towards the axial end configured to mount the plug (9).

5. The ladder as set forth in any of the preceding claims, **characterized in that** each opening (5) in the side rail (1) for mounting a rung (6) is round and the spacing (A) between said two ribs (3a, 3b) corresponds at least approximately to the diameter of the opening (5).

6. The ladder as set forth in any of the preceding claims, **characterized in that** the outer diameter of the rung (6) ranges from 0.05 to 1 mm, particularly from 0.2 to 0.5 mm smaller than the spacing (A) between said two ribs (3a, 3b).

7. The ladder as set forth in claim 3, **characterized in that** the plug (9) is provided with a header (13) which follows the second conical portion (12), the axial spacing (D) between the axial end of the header (13) and the end of the conical portion (12) facing the header (13) being smaller than the inner radius or half width of the inner side of each side rail (1).

8. The ladder as set forth in any of the preceding claims, **characterized in that** arranged at the inner side of the side rail (1) are two ribs (3a, 3b) at right angles to the longitudinal axis (L) of the radial opening (5).

9. The ladder as set forth in any of the preceding claims, **characterized in that** arranged at the inner side of the side rail (1) are four ribs (3a,4a, 3b, 4b) offset at 90° to each other.

10. The ladder as set forth in any of the preceding claims, **characterized in that** the front conical portion (11) of the plug (9) is less conical than the conical rear portion (12).

11. The ladder as set forth in any of the preceding claims, **characterized in that** the side rail (1) and the rung (6) are made of aluminum and the plug (9) is made of aluminum or plastics.

12. A method for anchoring a tubular ladder rung in a tubular ladder side rail, each side rail (1) featuring on the inner side at least two ribs (3a, 3b) and each rung (6) being inserted into a radial opening (5) of the side rail (1) and ended with an anchoring plug (9) which on insertion of the rung (6) in the side rail (1) comes into contact with the inner side of the side rail (1) in widening the rung (6) for anchoring, **characterized in that** the rung (6) on being inserted into the side rail (1) is widened in front of and behind each rib (3a, 3b)

## Revendications

1. Echelle comportant des montants et des barreaux constitués de profilés creux, sachant que le montant (1) respectif est pourvu, sur le côté intérieur, d'au moins deux nervures (3a, 3b) et qu'un barreau (6) respectif est logé dans une ouverture (5) radiale du montant (1) respectif et est pourvu, côté extrémité, d'un cache (9), lequel cache vient en appui contre le côté intérieur du montant (1) lors de l'introduction du barreau (6) dans le montant (1) et élargit le barreau (6) dans la zone d'extrémité de telle manière que le barreau (6) est ancré dans le montant (1), **caractérisée en ce que** le cache (9) est réalisé de telle manière que le barreau (6) est élargi devant et derrière la nervure (3a, 3b) lors de son introduction dans le montant (1).

2. Echelle selon la revendication 1, **caractérisée en ce que** le montant (1) respectif présente deux nervures (3a, 3b) diamétralement opposées, et **en ce que** le cache (9) est pourvu d'une section conique (12) servant à élargir le barreau derrière lesdites deux nervures (3a, 3b), sachant que le diamètre extérieur (C) maximal de la section conique (12) est inférieur à la petite distance (A) entre les deux nervures (3a, 3b) diamétralement opposées.

3. Echelle selon la revendication 1, **caractérisée en ce que** le cache (9) présente une première section conique avant (11) et une deuxième section conique arrière (12), sachant que la section conique avant (11) est réalisée de telle manière que le barreau (6) est pourvu, lors de son introduction dans le montant (1), d'un premier élargissement (15) dans la zone située entre la nervure (3a, 3b) et l'ouverture (5) radiale et sachant que la section conique arrière (12) est réalisée de telle manière que le barreau (6) est pourvu, lors de son introduction dans le montant (1), d'un deuxième élargissement (16) dans la zone de son extrémité axiale derrière les deux nervures (3a, 3b).

4. Echelle selon l'une quelconque des revendications précédentes, **caractérisée en ce que** le barreau (6) est pourvu, sur le côté intérieur, d'une zone (8) s'élargissant de manière conique en direction de l'extrémité axiale, ladite zone étant réalisée afin de recevoir le cache (9).

5. Echelle selon l'une quelconque des revendications précédentes, **caractérisée en ce que** l'ouverture (5) pratiquée dans le montant (1) et servant à recevoir un barreau (6) est ronde, et **en ce que** la petite distance (A) entre lesdites deux nervures (3a, 3b) correspond au moins approximativement au diamètre de l'ouverture (5).

6. Echelle selon l'une quelconque des revendications précédentes, **caractérisée en ce que** le diamètre extérieur du barreau (6) compris entre 0,05 et 1 mm, de préférence entre 0,2 et 0,5 mm est inférieur à la petite distance (A) entre lesdites deux nervures (3a, 3b).

7. Echelle selon la revendication 3, **caractérisée en ce que** le cache (9) est pourvu d'une partie tête (13), qui suit la deuxième section conique (12), sachant que la distance axiale (D) entre l'extrémité axiale de la partie tête (13) et l'extrémité, tournée vers la partie tête (13), de la deuxième section cylindrique (12) est inférieure au rayon intérieur ou à la moitié de la largeur du côté intérieur du montant (1) respectif.

8. Echelle selon l'une quelconque des revendications précédentes, **caractérisée en ce que** deux nervures (3a, 3b) sont disposées selon un angle droit par rapport à l'axe longitudinal (L) de l'ouverture (5) radiale sur le côté intérieur du montant (1).

9. Echelle selon l'une quelconque des revendications précédentes, **caractérisée en ce que** quatre nervures (3a, 4a, 3b, 4b) décalées respectivement de 90° les unes par rapport aux autres sont disposées sur le côté intérieur du montant (1).

10. Echelle selon l'une quelconque des revendications précédentes, **caractérisée en ce que** la section conique avant (11) du cache (9) présente une conicité plus faible que la section conique arrière (12).

11. Echelle selon l'une quelconque des revendications précédentes, **caractérisée en ce que** le montant (1) et le barreau (6) sont fabriqués à partir d'un métal léger, et **en ce que** le cache (9) est fabriqué à partir d'un métal léger ou d'un plastique.

12. Procédé servant à ancrer un barreau d'échelle formé par un profilé creux dans un montant d'échelle formé par un profilé creux, sachant que le montant (1) respectif est pourvu, sur le côté intérieur, d'au moins deux nervures (3a, 3b) et que le barreau (6) respectif est inséré dans le montant (1) à travers une ouverture (5) radiale pratiquée dans ce dernier, et sachant qu'un cache (9) entraînant l'ancrage est introduit dans l'extrémité du barreau (6), lequel cache vient en appui contre le côté intérieur du montant (1) lors de l'introduction du barreau (6) dans le montant (1) et élargit le barreau (6) aux fins de l'ancrage, **caractérisé en ce que** le barreau (6) est élargi par le cache devant et derrière la nervure (3a, 3b) lors de son introduction dans le montant (1).
